# FASCICULE DE BREVET EUROPEEN

(11) **EP 2 419 487 B1**
(45) Date de publication et mention de la délivrance du brevet: **08.10.2014**
(21) Numéro de dépôt: 10717786.7
(22) Date de dépôt: 14.04.2010
(51) Int. Cl.: C09K 8/34, C09K 8/32

(54) **FLUIDE DE FORAGE POUR OFFSHORE PROFOND**
FLUID FÜR TIEFE BOHRLÖCHER IM MEER
FLUID FOR DEEP OFFSHORE DRILLING

(30) Priorité: 15.04.2009 FR 0901830
(43) Date de publication de la demande: 22.02.2012
(73) Titulaire: TOTAL MARKETING SERVICES, 92800 Puteaux (FR)
(72) Inventeur: LAMRANI-KERN, Samia, F-94170 Le Perreux Sur Marne (FR)
(74) Mandataire: Corizzi, Valérie
(86) Numéro de dépôt international: PCT/IB2010/051625
(87) Numéro de publication internationale: WO 2010/119413

(56) Documents cités:
- WO-A-01/83640
- WO-A-97/04038
- WO-A-97/34963
- US-A- 6 034 037
- US-A1- 2007 213 229

## Description

La présente invention concerne un fluide de forage particulièrement adapté aux forages dans les off shore profonds (en mer profonde), c'est-à-dire des forages dans des conditions de températures de profondeurs particulièrement difficiles. Ainsi, on peut opérer en mer dans les grands fonds jusqu'à 5500 m, le gradient de température entre l'entrée du puits et le fond du puits pouvant atteindre 200°C, la température d'entrée du puits pouvant voisiner des températures polaires et la température de fond de puits plus de 160°C. La présente invention concerne également la boue de forage comprenant le dit fluide, et l'utilisation de celle-ci.

Les Fluides de forage entrent dans la composition des boues de forage à hauteur de 30 à 95% en poids. Ces boues de forage jouent un rôle essentiel lors des opérations de forage on shore ou off shore, car elles permettent de lubrifier l'outil de forage (ou trépan) pour limiter son usure, mais aussi de remonter à la surface pour traitement, les déblais de roche (cuttings) générés lors du forage et de les maintenir en suspension lors des phases d'arrêt de la circulation de la boue, et enfin d'assurer le maintien de la pression dans la formation afin d'éviter les fuites et/ou les effondrements de parois.

La boue de forage est généralement stockée à la surface du puits afin d'être pompée.

Les boues de forage ont des formulations très complexes dépendant de la nature des formations traversées, de la profondeur, de la géométrie, des conditions de pression, de température, et autres caractéristiques du puits.

Il existe deux catégories primaires de boues de forage: les boues à l'eau et les boues à l'huile.

Dans les boues à l'eau (WBM ou Water Base Mud en anglais), le fluide de forage est de l'eau aussi restent-elles réservées aux applications peu techniques et aux forages on shore(sur terre), ou off shore très peu profond (quelques mètres).

Dans les boues à huile (OBM ou Oil Base Mud en anglais), le fluide de forage est un fluide hydrocarboné choisi parmi différents composés disponibles sur le marché.

On classe ces fluides de forage en 3 grandes catégories :
Le Groupe I comprend les fluides de forage fortement aromatiques contenant de 5 à 30% mono aromatique et/ou poly aromatiques issus du raffinage des pétroles bruts, c'est-à-dire les gazoles et les huiles minérales conventionnelles.
Le Groupe II comprend les fluides de forage modérément aromatiques issus du raffinage pétrole brut et contenant de 0,5 à 5% de composés monoaromatiques et/ou polyaromatiques comme les huiles minérales non conventionnelles ou faiblement hydrotraitées souvent appelées LTMO (Low Toxicity Mineral Oil ou huile minérale à basse toxicité).

Enfin, le Groupe III comprend les fluides de forage faiblement aromatiques, c'est-à-dire contenant moins de 0,5% d'aromatiques totaux dont moins de 10 ppm de polyaromatiques. Ces fluides sont issus de synthèses chimiques, ou de coupes raffinées sévèrement hydrotraitées, hydrocraquées ou hydroisomérisés. Ils peuvent également être composés de paraffines synthétiques issues du procédé Fisher Tropsch, d'oléfines polymérisées (Internal Oléfines ou IO, Alpha Oléfines linéaire ou LAO, et Poly Alpha Oléfines ou PAO), ainsi que d'esters. Ces fluides du Groupe III sont dits synthétiques conformément à la définition du Protocole OSPAR par Décision 2000/3 « on the Use of Organic-Phase Drilling Fluids (OPF) and the Discharge of OPF-Contaminated Cuttings. »

Ces fluides du Groupe III sont préférés par les opérateurs non seulement pour leur stabilité thermique, leur résistance à l'oxydation, pour leur faible toxicité liée à leur faible aromaticité, pour leur caractère non irritant et respectueux de l'environnement mais aussi pour leur respect des exigences de sécurité, par un point éclair élevé et une moindre volatilité.

En effet, des vapeurs hydrocarbonées du fluide de forage en suspension dans l'air ambiant peuvent atteindre des concentrations significatives autour des tamis vibrant de récupération de boue, et autour des points de stockage et de traitement de la boue. De ce fait, Les opérateurs présents pour les opérations de forage peuvent se trouver en contact avec les boues contenant ces fluides, soit par contact dermique soit par inhalation. Ce personnel peut ainsi être exposé à des concentrations de produits hydrocarbonés vaporisés supérieures à 450 mg/m3. En Norvège, les autorités (Norwegian Labour Inspection Authority 2003) limitent le taux d'exposition des opérateurs (OEL Occupational Exposure Limit) à 50 mg/m³ de vapeurs hydrocarbonées dans l'environnement d'un puits de forage. Ils a été constaté une augmentation significative du risque de cancer ou de fibrose du poumon entre 50 et 100 mg/m³.

De plus, outre la volatilité intrinsèque liée à la nature hydrocarbonée et à la composition du fluide, la température de la boue à la sortie du puits et son débit de circulation vont venir influencer la quantité de vapeur dans la zone de travail et par conséquent, le niveau d'exposition des opérateurs.

La connaissance du taux de volatilité du fluide de forage est donc essentielle pour la maîtrise des impacts sur la santé et la sécurité des opérateurs. Néanmoins, cette volatilité reste difficile à quantifier, notamment pour les fluides hydrocarbonés faiblement volatiles.

Cependant ce critère de volatilité n'est important qu'au moment du retour de la boue en surface, et la boue doit surtout présenter toutes les caractéristiques requises pour que le trépan au fond du puits ne s'use pas trop vite ou ne se bloque pas.

Les propriétés rhéologiques principales des boues à l'huile contenant de 60% à 95% en poids d'au moins un fluide de forage, notamment en termes de viscosité sous contrainte, dépendent essentiellement de celles du fluide. Dans le cas présent, une bonne rhéologie à froid entre - 10°C et -20°C consiste à atteindre une bonne viscosité à ces températures tout en maintenant égales les autres caractéristiques.

Pour atteindre des températures négatives, inférieures à -10°C notamment, on préfère souvent utiliser des hydrocarbures légers présentant de bonnes propriétés en viscosité à froid. Cependant de tels hydrocarbures présentent l'inconvénient d'être également très volatils ce qui augmente les risques liés à la sécurité et à la santé des utilisateurs à la remontée en tête de puits où la température de la boue atteint plus de 60°C. De plus, on recherche des fluides de très faible viscosité, par exemple de viscosité cinématique à 40°C inférieure à 2.5 mm²/s selon ISO 3104 ou ASTM D445, dans le cas de forages profonds afin de limiter les pertes d'énergie par frottement, principalement au niveau de la tige foreuse, en vue de diminuer le temps de forage.

Pour sélectionner les fluides de forage, il est usuel de mesurer leurs viscosités cinématiques à 20°C (Kv20°C) et à 40°C (Kv40°C) selon la norme ISO 3104 (ou ASTM D445). Cependant, c'est insuffisant pour représenter le comportement rhéologique du fluide en fonction des différentes températures auxquelles il sera soumis. On préfère établir une courbe rhéologique du fluide correspondant à l'évolution de sa viscosité cinématique entre -20°C et 100°C par mesures successives selon la norme ISO 3104.

Pour comparer la volatilité des fluides de forage, on peut discriminer ces fluides sur la base de leurs points éclairs mesurés selon la norme ASTM D 93. Cependant, cette mesure est insuffisante pour apprécier la volatilité effective, notamment celle de la boue à la sortie d'un puits en cours de forage. De nombreuses méthodes ont vu le jour pour essayer de quantifier cette volatilité. En Europe, 7 méthodes ont été répertoriées et reconnues par le HSPA (Hydrocarbon Solvent Producer Associations) pour quantifier la volatilité des fluides hydrocarbonés. Ces méthodes sont décrites dans le document OECD Guidelines 104 du 7 juillet 1995. Ces méthodes ne permettent pas de déterminer à l'aide d'une méthode unique la volatilité sur la totalité du domaine possible compris entre 10⁻⁴ et 10⁺⁵ Pa (0.1 à 1000 mbars). De plus, pour mesurer de faibles tensions de vapeurs, ou pressions inférieures à 0.005 mbars à 20°C, les méthodes répertoriées ont des intervalles de reproductibilité trop larges qui ne permettent pas de discriminer facilement les produits des uns des autres, notamment pour les produits de très faible volatilité.

Pour modéliser ces méthodes, les américains et les européens ont développé des outils de calculs de volatilité communs prenant en compte les caractéristiques physico-chimiques et la composition des fluides. Actuellement, deux protocoles ont été proposés : le VPtool recommandé en Europe par le HSPA (Hydrocarbon Solvent Producer Associations) décrit dans le texte OECD Guidelines 104 du 27.07.1995 disponible auprès de l'administration européenne, et l'EPIWINNT recommandé aux USA par l'USEPA (US Environmmental Protection Agency). Ces outils de calcul modélisés permettent de définir la tension de vapeur à 20°C (ou pression de vapeur à 20°C) d'un fluide à partir des caractéristiques physico-chimiques et de la composition dudit fluide.

Parmi les fluides pour boue à huile utilisés sur les champs pétroliers, les coupes Diesel aromatiques issues de gazoles de distillation directes de température de distillation comprises entre 250 et 380°C présentent une viscosité à 40°C déterminée selon la norme ISO 3104 de l'ordre de 3mm²/s pour une volatilité à 100°C de 10 mBars(1 KPa). Ces fluides sont de moins en moins utilisés car leur toxicité est élevée du fait de leur teneur élevée en aromatiques, supérieure à 10%, ce qui les rend impropres pour les forages offshore puisqu'en contradiction avec les réglementations environnementales de la plupart des pays.

On connaît également les fluides de forage à base de coupes kérosène faiblement hydrotraitées présentes sur le marché et dont la viscosité varie de 1.7 à 1.9 mm²/s pour une volatilité de 20 à 25 mBars(2 à 2.5 KPa). Si la viscosité à 40°C est bonne, ces fluides sont très volatils, ce qui va à l'encontre des règles environnementales et de sécurité.

Les foreurs utilisent mais de façon moins systématique des hydrocarbures à majorité de n-paraffines : leur viscosité varie de 1.5 à 2 mm²/s, tandis que leur volatilité reste au-dessus de 11 mBars(1.1 KPa) : leur point d'écoulement proche de 0°C (ASTM D97), et leur viscosité à basse température très élevée (Viscosité cinématique à 0°C supérieure 12 cSt selon ASTM D445) les rend impropres au forage offshore profond.

Le brevet WO97/34963 préconise l'emploi comme fluides de forage des coupes hydrocarbonées obtenues par transformation GTL ou Gas to liquid, d'un gaz de synthèse, après hydrocraquage et hydroisomérisation du produit obtenu. Ce document préconise l'utilisation de fluides de forage non toxiques, non polluants et biodégradables, ces fluides étant composés d'un mélange de n-paraffines de C10 à C24 et d'isoparaffines, le rapport isoparaffines-n-paraffines variant de 0.5 : 1 à environ 9 : 1, les isoparaffines contenant plus de 50% en poids d'espèces monométhylées rapporté au poids total des isoparaffines présentes dans le mélange. Cependant, si les caractéristiques en viscosité à 40°C sont acceptables rien n'est dit sur la volatilité de ces coupes.

Le but de la présente invention est ici de disposer d'un fluide de forage présentant le meilleur compromis en termes de viscosité et de volatilité.

Elle vise en particulier l'obtention d'un fluide dont les caractéristiques présentent le meilleur compromis entre une viscosité à 40 °C toujours inférieure à 2.5mm²/s et une volatilité calculée selon le protocole VPtool caractérisée par une pression de vapeur à 100°C toujours inférieure à 10 mBars(1 KPa).

La présente invention a donc pour objet un fluide de forage de viscosité à 40°C inférieure ou égale à 2.5mm²/s et de pression de vapeur à 100°C inférieur ou égale à 10 mBars(KPa)obtenue à partir d'une coupe hydrocarbonée de température de distillation comprise entre 200 et 350°C contenant une teneur en hydrocarbures naphténiques inférieure à 40%, de préférence inférieure à 35%, en poids de la dite coupe, et de préférence dont le point d'écoulement est inférieur à -20°C selon la norme ASTM D97. De préférence, le fluide a une viscosité cinématique à 40 °C inférieure à 2.3 mm²/s.

Pour obtenir les valeurs de pression de vapeur, la Demanderesse a utilisé un modèle de calcul parfaitement corrélé à l'outil VPTool, ayant l'avantage de calculer la tension de vapeur d'un fluide hydrocarboné entre 0 et 200°C à partir de ses caractéristiques physico-chimiques et de sa composition.

Outre le fait que ce fluide est un bon compromis pour équilibrer viscosité et tension de vapeur, il présente également de bonnes propriétés solvantes pour les additifs généralement utilisés dans les boues de forage, et surtout une bonne tenue à froid, lié à un point d'écoulement bas, mais aussi une toxicité faible liée à son très faible taux d'aromatiques, une biodégradabilité importante, supérieure à 60% selon le protocole OECD 306 ainsi que d'excellentes propriétés ecotoxicologiques (compatibles avec la réglementation OSPAR).

Dans le cadre de la présente invention, ce fluide comprend des coupes hydrocarbonées obtenues par distillation directe des pétroles bruts, les produits distillés étant ultérieurement hydrocraqués et/ou, hydrotraités, ou même hydrodéparaffinés. Ces fluides peuvent être éventuellement utilisés en mélange avec des esters d'huiles végétales dans des rapports de concentration compris entre 10/90 et 90/10.

Par hydrotraitement, on entend désulfurer et/ou déaromatisé le taux de désulfuration et ou de déaroamtisation pouvant être très élevé.

De préférence, ces fluides présentent une teneur en aromatiques inférieure à 500 ppm et une teneur en soufre inférieure à 50ppm.

De préférence, la teneur en aromatiques sera inférieure à 100ppm et la teneur en soufre inférieure à 10ppm.

Ce fluide est obtenu à partir d'hydrocarbures du groupe constitué par les jets et les kérosènes fortement désaromatisés et désulfurés de point d'écoulement inférieur à -20°C mesuré selon la norme ASTM D97.

Par jet, on entend des mélanges de coupes essence de températures d'ébullition comprises entre 130 et 210 °C et de coupes kérosènes de températures d'ébullition comprises entre 180 et 260°C mesurés selon l'ASTM D86.

De façon plus particulière, le fluide selon l'invention comprend plus de 50% en poids d'hydrocarbures contenant de 12 à 24 atomes de carbone, et de préférence plus de 70 % d'hydrocarbures de 16 à 22 atomes de carbones.

Ces fluides sont composés de plus de 25% en poids d'isoparaffines et moins de 45% en poids de n-paraffines et moins de 500ppm d'aromatiques. Plus particulièrement, on choisit des fluides contenant 25 à 70% d'isoparaffines et de 5 à 45% de n-paraffines et moins de 100ppm d'aromatiques. Typiquement, ces fluides contiennent une concentration en naphtènes comprises entre 20 at 40% en poids, de préférence entre 25 et 35% en poids du fluide.

Ces fluides peuvent être utilisés seuls ou en combinaison avec des fluides de l'art antérieur si les caractéristiques finales du fluide composé respectent les caractéristiques de viscosité et de volatilité calculée, et de point d'écoulement, objet de l'invention.

Un autre objet de l'invention est l'utilisation de ce fluide dans la fabrication des boues de forage, boues à huile et /ou boues à l'eau. De préférence, la boue de forage comprendra plus de 30% du fluide de forage. Il sera utilisé en combinaison avec des additifs fonctionnels selon le type d'application de la boue. Un des principaux additifs fonctionnels de la boue ou du fluide est l'agent alourdissant essentiellement constitué de barite. D'autres additifs peuvent être utilisés en combinaison qui sont les émulsifiants, les agents mouillants, les viscosifiants, des agents réducteurs de filtrats, des agents de particules pour former les filtres à gravier, des agents de soutènement pour maintien des fractures ouvertes de façon hydraulique dans les formations souterraines, comme la cellophane, le scleroglucane et le xanthane.

Les compositions de ces boues obtenues à partir de fluides selon l'invention, vont varier selon qu'elles seront utilisées comme fluide tampon, comme boue de forage ou comme fluide de fracturation des formations souterraines.

De préférence cette boue de forage sera constituée de 30% à 95% de fluide et de 5% à 70% d'additifs fonctionnels de la dite boue.

Un troisième objet de l'invention est l'utilisation de la boue contenant de 30 à 95% du fluide selon l'invention pour le forage en mer à des profondeurs de plus de 2000m, de préférence de plus de 4000m, pour le forage de puits également de plus de 2000m, de préférence de plus de 4000m, ces puits étant des puits classiques, horizontaux ou déviés.

Cette boue peut être utilisée comme fluide tampon, comme boue de forage ou comme fluide de fracturation des formations souterraines.

A titre d'illustration de l'invention, des exemples sont donnés ci-après mais ne pourront être interprétés comme limitatifs de l'invention.

### EXEMPLE 1

Le présent exemple vise à comparer les caractéristiques des fluides selon l'invention ci-après désignés Di avec ceux usuellement utilisés référencés Ti.

Le tableau I ci-après regroupe les caractéristiques techniques des chacune de ces fluides.

**TABLEAU I**

| Densité | Point éclair °C | Point d'écoulement °C | Point d'aniline °C | T°C /nbre Carbones (°C) | Iso-paraffines % | N-paraffines % | Naphtène s% | Aromatique % |
|---|---|---|---|---|---|---|---|---|
| T1 | 115 | -27 | 91 | 250 - 335 (C14-C18) | 48% | 8% | 44% | < 0.010 % |
| T2 | 100 | -51 | 80 | 230-270 (C13-C16) | 35% | 6% | 59% | < 0.005 % |
| T3 | 95 | -6 | 87 | 210-250 C11-C17 | <5% | 95.6% | <5% | <0.2% |
| T4 ** | 83 | -39 | 85 | 200-250 (C10-C15) | 37% | 22% | 41% | <0.5 % |
| T5 | 68 | -50 | 64 | 188-250 (C11-C16) | 40% | <5% | 40% | 15% |
| T6 | 87 | -15 | < 60 | (C9 - C27) | | | | > 20 % |
| D1 | 100 | -27 | 79.3 | 230-262 (C12-C16) | 25 | 42 | 33 | < 0.005 |
| D2 | 100 | -30 | 87 | 225-325 (C12-C20) | 63 | 9 | 28 | < 0.010 |
| D3 * | 100 | -27 | 82 | 225-300 (C12-C18) | 45 | 25 | 30 | < 0.010 |

| | | | | | | | | |
|---|---|---|---|---|---|---|---|---|
| * D3=0.5 D1 +0.5 D2 **T4 according to prior art WO97/34963 | | | | | | | | |

Les performances comparées des composés selon l'invention et des produits de l'art antérieur sont données dans le tableau II ci- après.

**TABLEAU II**

| | T1 | T2 | T3 | T4 | T5 | T6 | D1 | D2 | D3 |
|---|---|---|---|---|---|---|---|---|---|
| VP à 100°C (mbars) | 1.456 | 6.311 | 11.747 | 22.381 | 25.6 | 28.564 | 8.371 | 4.088 | 6.19 |
| Kv40 (Cst) | 3.5 | 2.3 | 1.8 | 1.7 | 1.5 | 2.9 | 2.1 | 2.5 | 2.2 |
| Dens. (kg/m³) | 820 | 814 | 763 | 796 | 800 | 844 | 807 | 790 | 810 |

| | | | | | | | | | |
|---|---|---|---|---|---|---|---|---|---|
| * Densité mesurée à 15°C selon EN ISO12185 | | | | | | | | | |

Les valeurs de Vp ont été calculées au moyen de l'outil VP Tool à 100°C.

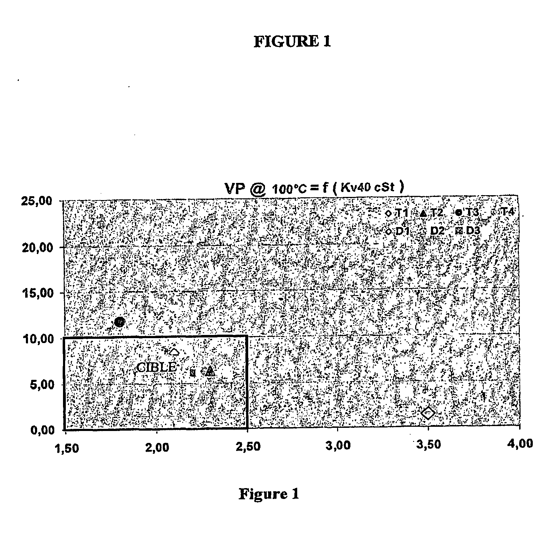

Les résultats sont comparés à l'aide du graphe représenté dans la figure 1. Le meilleur compromis consiste à avoir un KV40 à 40°C inférieur à 2.5 Cst, et un Vp calculé à 100°C inférieur à 10 mbars. De préférence les points dans les intervalles inférieur 2.3 Cst et moins de 10 mbars sont préférés. Comparés aux produits de l'art antérieur, D1, D2 et D3 présentent les caractéristiques optimales en termes de volatilité et viscosité tout en présentant une teneur en aromatique faible.

## Revendications

1. Fluide de forage obtenu à partir d'une coupe hydrocarbonée de température de distillation comprise entre 200 et 350°C contenant :
- une teneur en hydrocarbures naphténiques inférieure à 40% en poids de la dite coupe,
- une teneur en isoparaffines allant de 25% à 70%,
- une teneur en n-paraffines allant de 5 à 45%,
- une teneur en aromatiques inférieure à 100 ppm, dont la viscosité à 40°C est inférieure ou égale à 2,5 mm²/s pour une pression de vapeur à 100°C inférieure ou égale à 10 mbar (1KPa).

2. Fluide selon la revendication 1 contenant une teneur en hydrocarbures naphténiques inférieure à 35%.

3. Fluide selon l'une des revendications 1 et 2, présentant un point d'écoulement inférieur à -20°C.

4. Fluide selon la revendication 1 **caractérisé en ce que** sa viscosité cinématique à 40 °C est inférieure à 2,3 mm²/s.

5. Fluide selon l'une des revendications 1 à 4 **caractérisé en ce qu'**il comprend des coupes hydrocarbonées obtenues par hydrocraquage et/ou hydrotraitement ou hydrodéparaffinage de coupes issues de la distillation directe des pétroles bruts, éventuellement en mélange avec des esters d'huiles végétales.

6. Fluide selon l'une des revendications 1 à 5 **caractérisé en ce que** sa teneur en soufre est inférieure à 50 ppm.

7. Fluide selon l'une des revendications 1 à 6 **caractérisé en ce qu'**il est obtenu à partir d'hydrocarbures du groupe constitué par les jets et les kérosènes fortement désaromatisés et désulfurés, de point d'écoulement inférieur à -20°C mesuré selon la norme ASTM D97.

8. Fluide selon l'une des revendications 1 à 7 **caractérisé en ce qu'**il comprend plus de 50% en poids d'hydrocarbures contenant de 12 à 24 atomes de carbone, et de préférence plus de 70 % d'hydrocarbures de 16 à 22 atomes de carbones.

9. Fluide selon l'une des revendications 1 à 8 **caractérisé en ce qu'**il contient plus de 25% en poids d'isoparaffines et moins de 45% en poids de n-paraffines pour une concentration en naphtènes inférieure à 35% en poids.

10. Boue de forage comprenant plus de 30% du fluide de forage selon l'une des revendications précédentes en combinaison avec des additifs fonctionnels.

11. Boue selon la revendication 10 **caractérisée en ce qu'**elle comprend de 30 à 95% de fluide et de 5 à 70% d'additifs fonctionnels choisis dans le groupe constitué par les agents alourdissants, les émulsifiants, les agents mouillants, les viscosifiants, des agents réducteurs de filtrats, des agents de particules pour former les filtres à gravier, des agents de soutènement pour maintien des fractures ouvertes de façon hydraulique dans les formations souterraines, comme la cellophane, le scleroglucane, le xanthane.

12. Utilisation de la boue selon l'une des revendications 10 ou 11 pour le forage, notamment forage en mer, avantageusement à des profondeurs de plus de 2000m, de préférence de plus de 4000m, pour le forage de puits également de plus de 2000m, de préférence de plus de 4000m, ces puits étant des puits classiques, horizontaux ou déviés.

## Patentansprüche

1. Bohrfluid, hergestellt aus einer Kohlenwasserstofffraktion einer Destillationstemperatur zwischen 200 und 350 °C inklusive, enthaltend:
- einen Gehalt an naphtenischen Kohlenwasserstoffen unter 40 Gew.-% der Fraktion,
- einen Gehalt an Isoparaffinen von 25 % bis 70 %,
- einen Gehalt an n-Paraffinen von 5 % bis 45 %,
- einen Gehalt an Aromatischen unter 100 ppm, deren Viskosität bei 40 °C unter oder gleich 2,5 mm²/s ist bei einem Dampfdruck bei 100 °C unter oder gleich 10 mbars (1 KPa).

2. Fluid nach Anspruch 1, dessen Gehalt an naphtenischen Kohlenwasserstoffen unter 35 % ist.

3. Fluid nach einen der Ansprüche 1 und 2, das einen Stockpunkt unter -20 °C aufweist.

4. Fluid nach Anspruch 1, **dadurch gekennzeichnet, dass** seine kinematische Viskosität bei 40 °C unter 2,3 mm²/s ist.

5. Fluid nach einem der Ansprüche 1 bis 4, **dadurch gekennzeichnet, dass** es Kohlenwasserstofffraktionen umfasst, die durch Hydrocracking und/oder Hydrotreating oder Hydroentparaffinierung von Fraktionen gewonnen werden, die aus der direkten Destillation von Roherdölen stammen, eventuell im Gemisch mit Estern von Pflanzenölen.

6. Fluid nach einem der Ansprüche 1 bis 5, **dadurch gekennzeichnet, dass** sein Schwefelgehalt unter 50 ppm ist.

7. Fluid nach einem der Ansprüche 1 bis 6, **dadurch gekennzeichnet, dass** es aus Kohlenwasserstoffen gewonnen wird, die aus den stark entaromatisierten und entschwefelten Strahlen und Kerosinen mit einem Stockpunkt unter -20 °C, gemessen gemäß der Norm ASTM D97, bestehen.

8. Fluid nach einem der Ansprüche 1 bis 7, **dadurch gekennzeichnet, dass** es über 50 Gew.-% Kohlenwasserstoffe, die 12 bis 24 Kohlenstoffatome enthalten, und vorzugsweise über 70 % Kohlenwasserstoffe mit 16 bis 22 Kohlenstoffatomen umfasst.

9. Fluid nach einem der Ansprüche 1 bis 8, **dadurch gekennzeichnet, dass** es bei einer Naphtenkonzentration unter 35 Gew.-% über 25 Gew.-% Isoparaffine und unter 45 Gew.-% n-Paraffine enthält.

10. Bohrschlamm, der über 30 % Bohrfluid nach einem der vorangehenden Ansprüche in Kombination mit funktionalen Zusatzstoffen enthält.

11. Schlamm nach Anspruch 10, **dadurch gekennzeichnet, dass** er 30 bis 95 % Fluid und 5 bis 70 % funktionale Zusatzstoffe umfasst, die aus der Gruppe ausgewählt sind, die von den Belastungsmitteln, den Emulgatoren, den Benetzungsmitteln, den Viskosifizierern, den filtratreduzierenden Mitteln, den Partikelmitteln zur Bildung von Kiesfiltern, den Stützmitteln, um die Kluft in den unterirdischen Formationen hydraulisch offen zu halten, wie dem Cellophan, dem Scleroglucan, dem Xantan, gebildet werden.

12. Verwendung des Schlamms nach einem der Ansprüche 10 oder 11 für das Bohren, vor allem das Bohren im Meer, vorzugsweise in Tiefen von mehr als 2000 m, vorzugsweise von mehr als 4000 m, für das Bohren von Schächten von ebenfalls mehr als 2000 m, vorzugsweise von mehr als 4000 m, wobei diese Schächte klassische, horizontale oder abgelenkte Schächte sind.

## Claims

1. Drilling fluid obtained from a hydrocarbon cut having a distillation temperature comprised between 200 and 350°C containing:
- a naphthenic hydrocarbons content of less than 40% by weight of the said cut,
- an isoparaffins content from 25 to 70 % ;
- a n-paraffins content from 5 to 45% ;
- an aromatics content of less than 100 ppm, the viscosity of which at 40°C is less than or equal to 2.5 mm²/s, for a vapour pressure at 100°C of less than or equal to 10 mbar (1KPa).

2. Fluid according to claim 1 having a naphthenic hydrocarbons content of less than 35%.

3. Fluid according to one of claim 1 or 2, having a pour point of less than -20°C.

4. Fluid according to claim 1 **characterized in that** its kinematic viscosity at 40 °C is less than 2.3 mm²/s.

5. Fluid according to one of claims 1 to 4 **characterized in that** it comprises hydrocarbon cuts obtained by hydrocracking and/or hydrotreating or hydrodewaxing of cuts resulting from the straight-run distillation of crude oils, optionally mixed with esters of vegetable oils.

6. Fluid according to one of claims 1 to 5 **characterized in that** its sulphur content is less than 50 ppm.

7. Fluid according to one of claims 1 to 6 **characterized in that** it is obtained from hydrocarbons of the group constituted by highly dearomatized and desulphurized jet fuels and kerosines having a pour point below -20°C measured according to standard ASTM D97.

8. Fluid according to one of claims 1 to 7 **characterized in that** it comprises more than 50% by weight of hydrocarbons having from 12 to 24 carbon atoms, and preferably more than 70 % of hydrocarbons having from 16 to 22 carbon atoms.

9. Fluid according to one of claims 1 to 8 **characterized in that** it contains more than 25% by weight of isoparaffins and less than 45% by weight of n-paraffins for a naphthenes concentration of less than 35% by weight.

10. Drilling mud comprising more than 30% of the drilling fluid according to one of the previous claims in combination with functional additives.

11. Mud according to claim 10 **characterized in that** it comprises from 30 to 95% of fluid and from 5 to 70% of functional additives chosen from the group constituted by weighting agents, emulsifiers, wetting agents, viscosifiers, filtrate-reducing agents, particle agents for forming gravel filters, propping agents for keeping fractures open in hydraulic manner in underground formations, such as cellophane, scleroglucan, xanthan.

12. Use of the mud according to one of claims 10 or 11 for drilling, in particular drilling at sea, advantageously at depths of more than 2000 m, preferably more than 4000 m, for drilling wells likewise at more than 2000 m, preferably more than 4000 m, these wells being standard, horizontal or deviated wells.
